# EUROPÄISCHE PATENTANMELDUNG

(11) **EP 2 529 847 A1**
(43) Veröffentlichungstag der Anmeldung: **05.12.2012**
(21) Anmeldenummer: 12004003.5
(22) Anmeldetag: 23.05.2012
(51) Int. Cl.: B08B 9/30, B08B 9/34, B08B 6/00, B08B 5/02, B29C 49/42, B65G 51/03

(54) **Verfahren und Vorrichtung zum Ausblasen von Hohlkörpern aus Kunststoff**

(30) Priorität: 01.06.2011 CH 9392011
(71) Anmelder: M. Tanner AG, 8308 Illnau (CH)
(72) Erfinder: Tanner, Marcel, 8303 Bassersdorf (CH)
(74) Vertreter: Schaad, Balass, Menzl & Partner AG

(57) **Zusammenfassung**

Die Vorrichtung zum Ausblasen bzw. Reinigen von Hohlkörpern (1), wie Vorformlinge für Kunststoffbehälter, umfasst eine Transportstrecke (5) für die Hohlkörper (1) und Gasdüsen (11, 12), welche mehrere Gasströme (7, 8) zum Ausblasen der Hohlräume (9) der Hohlkörper (1) erzeugen. Die Gasdüsen (11, 12) sind in mehreren, aufeinander folgenden Baugruppen (16, 17, 18) in einem Gehäuse (33) einer Einrichtung (6) angeordnet. Dabei enthält eine erste Baugruppe (16) mindestens eine Gasdüse (11) mit einer lonisiereinrichtung (13) und eine zweite Baugruppe enthält mindestens eine Gasdüse (12) ohne lonisiereinrichtung. Zum Ausblasen werden mehrere Gasströme (7, 8) unterschiedlicher Art verwendet, wobei in Richtung (22) der Förderung der Hohlkörper (1) gesehen zuerst ein erster Gasstrom (7) mit ionisiertem Gas angewendet wird.

## Beschreibung

Die Erfindung betrifft ein Verfahren und eine Vorrichtung zum Ausblasen von Hohlkörpern, welche an einem Ende offen und am anderen Ende verschlossen sind, wie Vorformlinge für Kunststoffbehälter, wobei diese Hohlkörper in einer Reihe geordnet und mittels einer Fördereinrichtung entlang einer Transportstrecke gefördert werden und während der Fördererbewegung ein Gasstrom in den Hohlraum der Hohlkörper hineingeblasen wird und das aus dem Hohlraum austretende Gas loseTeile mitreisst und der Hohlraum gereinigt wird, sowie das Gas mit den Verunreinigungen abgesaugt wird.

Verfahren und Vorrichtungen zum Reinigen von Hohlkörpern, beispielsweise Flaschen oder Vorformlinge für Kunststoffflaschen, durch Ausspülen bzw. Ausblasen des Hohlraumes derartiger Hohlkörper mit Wasser und/oder einem Gasstrom, sind bei Produktionsanlagen für derartige Behälter bekannt. Aus US 6,173 827 ist eine Vorrichtung zum Reinigen des Hohlraumes von Vorformlingen aus Kunststoff für Kunststoffflaschen bekannt. Derartige Vorformlinge sind zumeist zylinderförmige Hohlkörper mit einem offenen und einem geschlossenen Ende, welche im Bereiche des offenen Endes einen Kragen aufweisen, welcher einen grösseren Durchmesser als der übrige Hohlkörper aufweist. Diese Vorformlinge werden in an sich bekannten Einrichtungen korrekt positioniert und in einer Reihe angeordnet. Diese Reihe von aneinander anschliessenden Vorformlingen wird in der beschriebenen Vorrichtung auf einer schrägen Rutsche mit Tragschienen, auch Ablaufschienen genannt, von einer Bearbeitungsstation zu einer nachfolgenden Bearbeitungsstation, zum Beispiel einer Kunststoffblasmaschine gefördert. Diese Ablaufschienen bilden dabei eine Transportstrecke einer Fördereinrichtung. In einem Teilbereich dieser Transportstrecke bzw. dieser schrägen Rutsche, in welcher die Vorformlinge mit ihren Kragen auf den Tragschienen aufliegen, ist eine Vorrichtung zum Reinigen der Vorformlinge angeordnet. In dieser Vorrichtung werden die Vorformlinge um 180° gewendet, so dass ihre Öffnung nach unten gerichtet ist und die Vorformlinge werden dabei weiterhin in Transportrichtung gefördert. Unterhalb der Vorformlinge und mit Abstand dazu sind mehrere Düsen angeordnet, über welche ionisiertes Gas in den Hohlraum der Vorformlinge eingeblasen wird. Durch das ionisierte Gas werden elektrostatische Aufladungen neutralisiert und allfällige Schmutzpartikel und Fremdkörper im Hohlraum der Vorformlinge können nach unten herausfallen. Anschliessend müssen die Vorformlinge wieder um 180° gewendet werden, so dass sie wieder in der korrekten Position, mit nach oben gerichteter Öffnung, an die Ablaufschienen übergeben werden können. Das Wenden der Vorformlinge gemäss dieser Lösung erfordert aufwendige Massnahmen sowie eine Zusatzeinrichtung, welche die Ablaufschienen unterbricht und das Transportieren ist bei den immer höher werdenden Fördergeschwindigkeiten und auch als Folge der leichter werdenden Vorformlinge sehr schwierig und teilweise nicht mehr möglich.

DE 101 40 906 A1 offenbart ein weiteres Verfahren und eine Vorrichtung zum Reinigen von hohlen Vorformlingen aus Kunststoff. Bei dieser Lösung werden die Vorformlinge durch einen Einlaufstern von einer Förderrinne übernommen und geordnet und vereinzelt. Anschliessend werden sie an ein Sternrad übergeben, in welchem sie mit ihrem Kragen vertikal hängend aufliegen, wobei das offene Ende nach oben gerichtet ist. Über einem Teilbereich des Sternrades ist eine Vorrichtung angeordnet, mit welcher eine Lanze in den Hohlraum des Vorformlings eingefahren werden kann, wobei diese Lanze am vorderen Ende eine Luftdüse aufweist. Über diese Lanze wird ionisierte Luft gegen das verschlossene Ende des Vorformlings geblasen, welche dann zwischen der Wandung des Vorformlings und der Lanze ausströmt und über dem offenen Ende des Vorformlings abgesaugt wird. Diese Lanze muss über einen bestimmten Zeitraum synchron mit dem Sternrad, bzw. den Vorformlingen in Förderrichtung mitlaufen und während dieser Zeit in die Vorformlinge eingefahren und wieder ausgefahren werden. Bei dieser Vorrichtung müssen die Vorformlinge nicht gewendet werden. Sie weist jedoch den Nachteil auf, dass der Aufbau des Sternrades und der zugehörigen Vorrichtung mit den ein-/ausfahrbaren Lanzen sehr aufwendig und störungsanfällig ist. Für Fördereinrichtungen, in welchen die Vorformlinge mit hoher Geschwindigkeit gefördert werden, ist diese Vorrichtung nur beschränkt geeignet und der Aufwand für die Mechanik und die Steuerung wird sehr gross.

Um Rohstoffe und Herstellkosten einzusparen wird versucht, Hohlkörper aus Kunststoff und damit auch die entsprechenden Vorformlinge dünnwandiger und leichter zu gestalten. Dies hat zur Folge, dass deren Handhabung in automatisierten Transportvorrichtungen immer schwieriger und störungsanfälliger wird. Zudem wird der Durchsatz pro Zeiteinheit und damit die Transportgeschwindigkeit immer höher. Es besteht deshalb der Wunsch, den Transportfluss der Hohlkörper, z.B. der Vorformlinge, nicht zu unterbrechen und Kontakte von Hilfseinrichtungen oder Eingriffe in den Hohlraum der Hohlkörper zu vermeiden.

Es ist deshalb Aufgabe der vorliegenden Erfindung, ein Verfahren und eine Vorrichtung der eingangs erwähnten Art zu schaffen, welche die oben genannten Nachteile behebt. Insbesondere soll die Erfindung gewährleisten, dass die Orientierung der Hohlkörper auf der Transportstrecke zum Ausblasen bzw. Reinigen nicht verändert werden muss, dass keine zusätzliche Positionierung der Hohlkörper notwendig ist und keine direkte Berührung der Hohlkörper stattfindet und auch nicht durch mechanische Elemente in den Hohlraum der Hohlkörper eingegriffen wird. Das Verfahren soll nicht in den Transportablauf und die Transportsteuerung der Hohlkörper eingreifen und die Vorrichtung soll als Zusatzelement an entsprechende Transportstrecken von Hohlkörpern, z.B. Ablaufschienen oder Rollenförderer, anbaubar sein.

Diese Aufgabe lösen ein Verfahren und eine Ausblasvorrichtung für Hohlkörper mit den Merkmalen der entsprechenden unabhängigen Patentansprüche. Gemäss dem erfindungsgemässen Verfahren wird die Aufgabe dadurch gelöst, dass zum Ausblasen der Hohlräume mehrere Gasströme unterschiedlicher Art verwendet werden und zuerst mindestens ein erster Strom von ionisiertem Gas in den Hohlraum jedes Hohlkörpers geblasen wird und die elektrostatische Ladungen im Hohlraum neutralisiert werden und daran anschliessend mindestens ein zweiter Strom von nicht ionisiertem Gas in den Hohlraum jedes Hohlkörper geblasen wird. Dadurch ergibt sich der Vorteil, dass das Neutralisieren der Schmutzpartikel im Hohlraum der Hohlkörper mittels des ionisierten Gasstromes und das Herausblasen dieser Schmutzpartikel aus dem Hohlraum in getrennten Verfahrensschritten erfolgen können. Dies macht es möglich, dass die beiden unterschiedlichen Gasströme optimal an die Betriebsbedingungen und die technischen Voraussetzungen angepasst werden können. So kann der ionisierte Gasstrom eine relativ niedrige Strömungsgeschwindigkeit aufweisen und bei mehreren Gasströmen müssen nicht alle Gasströme ionisiert werden. Dies führt zu Kosteneinsparungen, da Gasdüsen mit lonisiereinrichtungen wesentlich teurer als normale Gasdüsen sind. Die nicht ionisierten Gasströme, welche dem Ausblasen bzw. Ausspülen der Schmutzpartikel dienen, können eine erheblich höhere Strömungsgeschwindigkeit aufweisen und es kann eine grössere Anzahl von entsprechenden Gasdüsen angeordnet werden. Da der Betrieb und die Anwendung der Gasströme nicht in die Förderbewegung der Hohlkörper eingreift, können sehr hohe Geschwindigkeiten erreicht werden und durch die Möglichkeit der Verwendung unterschiedlicher Gasströme kann trotz der hohen Geschwindigkeit eine gute Reinigungsleistung erreicht werden.

Eine vorteilhafte Ausbildung der Erfindung sieht vor, dass die Strömungsachse mindestens eines der eingeblasenen Gasströme schräg zur Längsachse des Hohlraumes und teilweise in Richtung der Förderung der Hohlkörper gerichtet wird. Damit entsteht der Vorteil, dass die Hohlkörper während ihrer Transportbewegung entlang der Transportstrecke durch die Gasströmung zusätzlich positiv unterstützt und in Transportrichtung geschoben werden. Es kann aber auch vorteilhaft sein, dass die Strömungsachse mindestens eines der eingeblasenen Gasströme exzentrisch zur Längsachse des Hohlraumes der Hohlkörper ausgerichtet wird. Dadurch kann bewirkt werden, dass sich im Hohlraum des Hohlkörpers verbesserte Strömungsabläufe einstellen und die Schmutzpartikel besser ausgeblasen werden.

In einer weiteren bevorzugten Ausführungsform der Erfindung wird als Gas für die Gasströme Luft verwendet. Dabei wird üblicherweise gereinigte Luft verwendet. Es kann aber auch zweckmässig sein, ein inertes Gas oder ein Gas mit zusätzlicher Reinigungswirkung zu verwenden.

Es wird auch vorgeschlagen, dass der Druck, mit welchem der ionisierte Gasstrom erzeugt wird, so bestimmt wird, dass die Hohlkörper in ihrer Förderbewegung nicht gebremst werden und dieser Druck niedriger ist als der Druck, mit welchem der nicht ionisierte Gasstrom erzeugt wird. Dies ermöglicht die Erzeugung des ionisierten Gasstromes und die Ausrichtung der Strömungsachse dieses Gasstromes zentrisch zur Längsachse des Hohlraumes der Hohlkörper. Ein ionisierter Gasstrom, welcher mit höherem Druck erzeugt wird, kann auch schräg zur Längsachse des Hohlraumes der Hohlkörper ausgerichtet werden, wenn der Druck so hoch ist, dass dadurch die Transportbewegung der Hohlkörper behindert würde.

Gemäss der erfindungsgemässen Vorrichtung wird die Aufgabe dadurch gelöst, dass im Teilbereich der Transportstrecke und über den Hohlkörpern mindestens zwei Baugruppen von unterschiedlich ausgebildeten Gasdüsen zur Erzeugung mehrerer Gasströme angeordnet sind, eine erste Baugruppe mit mindestens einer Gasdüse mit einer lonisiereinrichtung ausgestattet ist und eine zweite Baugruppe mindestens eine Gasdüse ohne lonisiereinrichtung aufweist. Die Anordnung unterschiedlicher Gasdüsen in verschiedenen Baugruppen erbringt den Vorteil, dass eine oder mehrere derartige Baugruppen hintereinander angeordnet werden können. Die Gasdüsen in den einzelnen Baugruppen können entsprechend den gewünschten Eigenschaften ausgewählt und angeordnet werden. Zudem können die einzelnen Baugruppen, z.B. im Störungsfall, einzeln ausgetauscht werden. Zweckmässigerweise ist, in Förderrichtung der Hohlkörper gesehen, als erste Baugruppe eine Baugruppe mit mindestens einer Gasdüse mit einer lonisiereinrichtung angeordnet. Mit dieser Gasdüse kann ein ionisierter Gasstrom erzeugt werden, welcher allfällige elektrostatische Ladungen im Hohlraum der Hohlkörper und des Hohlkörpers selbst neutralisiert und dadurch das Ausblasen allfälliger Schmutzpartikel erleichtert. Diese Anordnung macht es möglich, dass die von den unterschiedlichen Gasdüsen erzeugten Gasströme optimal an die Betriebsbedingungen und die technischen Voraussetzungen angepasst werden können. So kann der ionisierte Gasstrom eine relativ niedrige Strömungsgeschwindigkeit aufweisen und bei mehreren Gasströmen müssen nicht alle Gasströme ionisiert werden. Dies führt zu Kosteneinsparungen, da Gasdüsen mit lonisiereinrichtungen wesentlich teurer als normale Gasdüsen sind. Die nicht ionisierten Gasströme, welche dem Ausblasen bzw. Ausspülen der Schmutzpartikel dienen, können eine erheblich höhere Strömungsgeschwindigkeit aufweisen und es kann eine grössere Anzahl von entsprechenden Gasdüsen angeordnet werden. Da die Düsen und andere Elemente der zugehörigen Baugruppen nicht in die Förderbewegung der Hohlkörper eingreifen, können sehr hohe Produktionsgeschwindigkeiten erreicht werden und durch die Möglichkeit der Einsatzes unterschiedlicher Gasdüsen und damit unterschiedlicher Gasströme kann trotz der hohen Produktionsgeschwindigkeit eine gute Reinigungsleistung erreicht werden.

Eine vorteilhafte Ausbildung des Erfindungsgegenstandes sieht vor, dass die Gasdüsen mit Zufuhrleitungen für Druckgas, wie Druckluft, verbunden sind. Als Druckgas sind inerte Gase oder Gase mit einem speziellen Reinigungseffekt, insbesondere aber Luft geeignet. An Produktionsanlagen dieser Art ist Druckluft zumeist ohnehin verfügbar und zusätzliche Geräte zur Erhöhung des Druckes, wie Kompressoren, sind nur notwendig, wenn die verfügbare Druckluft nicht unter genügend hohem Druck steht. Daraus ergibt sich eine kostengünstige Lösung.

Eine weitere Ausbildung der Erfindung sieht vor, dass eine oder mehrere der unterschiedlich ausgebildeten Gasdüsen jeweils in einer als Baugruppe ausgebildeten Vorrichtung angeordnet sind und jede dieser Baugruppen eine eigene Zuleitung für das Druckgas zu den Gasdüsen und einen eigenen Absaugkanal für das aus den Hohlkörpern austretende verschmutzte Gas aufweist. Diese Ausgestaltung führt zum Vorteil, dass die Gasdüsen in jeder einzelnen Baugruppe mit unterschiedlichen Gasen und/oder mit unterschiedlichen Gasdrücken bedient werden können. Zudem können die Baugruppen einfach ausgetauscht werden, da nur die Anschlüsse für das Druckgas und die Absaugkanäle sowie allfällige elektrische Anschlüsse an- bzw. abgekoppelt werden müssen.

Erfindungsgemäss wird weiter vorgeschlagen, dass in der Förderrichtung der Hohlkörper gesehen, zuerst eine erste Baugruppe mit drei Gasdüsen mit einer lonisiereinrichtung angeordnet ist, daran anschliessend eine zweite Baugruppe mit drei Gasdüsen ohne lonisiereinrichtung folgt und an diese zweite Baugruppe anschliessend eine dritte Baugruppe mit drei Gasdüsen ohne lonisiereinrichtung angeordnet ist. Diese Anordnung von drei Baugruppen mit je drei Gasdüsen erweist sich für die meisten Anwendungsfälle als optimal. Bei Bedarf kann jedoch in jeder Baugruppe die Anzahl der Düsen verändert werden oder es können auch zusätzliche Baugruppen eingebaut werden.

Eine weitere zweckmässige Ausgestaltung des Erfindungsgegenstandes sieht vor, dass mindestens die Strömungsachse der Gasdüsen ohne lonisiereinrichtung schräg zur Längsachse des Hohlraumes der Hohlkörper ausgerichtet ist und dabei die Strömungsachse der Gasdüsen in Gegenrichtung zur Transportrichtung der Hohlkörper geneigt ist. Dies ist so zu verstehen, dass die Spitze des Winkels, welcher zwischen der Strömungsachse der Gasdüsen und der Transportrichtung der Vorformlinge eingeschlossen ist, etwa in Transportrichtung gerichtet ist und dieser Winkel kleiner als 90° ist. Insbesondere bei Anwendung eines hohen Druckes zur Erzeugung des Gasstromes besteht die Möglichkeit, dass die Hohlkörper durch den Strömungsdruck gegen die Ablaufschienen in der Transportstrecke gedrückt und gebremst werden, wenn die Strömungsachse der Gasdüsen und damit des Gasstromes zentrisch zur Längsachse des Hohlraumes der Hohlkörper ausgerichtet ist. Diese Bremswirkung kann vermieden werden, wenn die Strömungsachse der Gasdüsen schräg zur Längsachse der Hohlräume der Hohlkörper angeordnet wird und zwischen diesen beiden Achsen ein Winkel von mindestens 1° und maximal 60° eingeschlossen wird. Die schräge Anordnung der Strömungsachse bewirkt, dass die Hohlkörper in ihrer Transportbewegung nicht gebremst, sondern zusätzlich positiv unterstützt und in Transportrichtung geschoben werden.

Eine weitere Ausbildung der Erfindung sieht vor, dass die Gasdüsen mit einer lonisiereinrichtung mit Druckluft und einem Druck beaufschlagt sind, welcher mindestens 0,5 bar niedriger ist als der Druck der Druckluft, mit welcher die Gasdüsen ohne lonisiereinrichtung beaufschlagt sind. So ist es beispielsweise zweckmässig die Gasdüsen mit einer lonisiereinrichtung mit einem Druck von 2 bar zu betreiben und die Gasdüsen ohne lonisiereinrichtung mit einem Druck von 4 bar. Diese Anordnung ermöglicht es, die Strömungsachsen der Gasdüsen mit einer lonisiereinrichtung zentrisch zur Längsachse des Hohlraumes der Hohlkörper auszurichten, ohne die Transportbewegung der Hohlkörper entlang der Transportstrecke zu behindern. Dabei kann der Druck des Gases je nach Ausgestaltung und Gewicht der geförderten und zu reinigenden Hohlkörper in einem weiten Bereich zwischen 1 bar und mehreren bar gewählt werden. Der entsprechend höhere Druck, mit welchem die Gasdüsen ohne lonisiereinrichtung beaufschlagt werden wird so gewählt, dass eine zweckmässige Strömung im Hohlraum der Hohlkörper entsteht und ein genügend grosser Luftstrom mit der gewünschten Reinigungswirkung vorliegt.

Erfindungsgemäss wird weiter vorgeschlagen, dass die Gasdüsen mit einer lonisiereinrichtung Einzeldüsen mit einer Düsenbohrung sind und diese Düsen an der Austrittsöffnung leitfähige Elemente für die Erzeugung einer Koronaentladung aufweisen. Es kann aber auch zweckmässig sein, dass die Gasdüsen mit der Ionisiereinrichtung aus einer in Schlitzform ausgebildeten Düse bestehen und einen integrierten Ionisationsstab enthalten. Damit kann die erfindungsgemässe Lösung in einem weiten Bereiche an unterschiedliche Bedingungen in der Ausgestaltung der Hohlkörper und des Vorganges der Hohlkörper angepasst werden.

Im Folgenden wird die Erfindung anhand von Ausführungsbeispielen unter Bezugnahme auf die beiliegenden Zeichnungen näher erläutert. Es zeigen jeweils in schematischer Darstellung:
- Fig. 1: einen Längsschnitt durch einen Teilbereich einer Transportstrecke mit einer erfindungsgemässen Vorrichtung,
- Fig. 2: einen vergrösserten Ausschnitt aus Fig. 1, mit einer Baugruppe mit nicht ionisierten Gasdüsen,
- Fig. 3: einen Querschnitt durch eine Baugruppe mit Gasdüsen mit einer lonisiereinrichtung,
- Fig. 4: einen Querschnitt durch eine Baugruppe mit Gasdüsen ohne lonisiereinrichtung, und
- Fig. 5: einen Querschnitt durch eine Baugruppe mit einer Schlitzdüse und einem lonisierstab

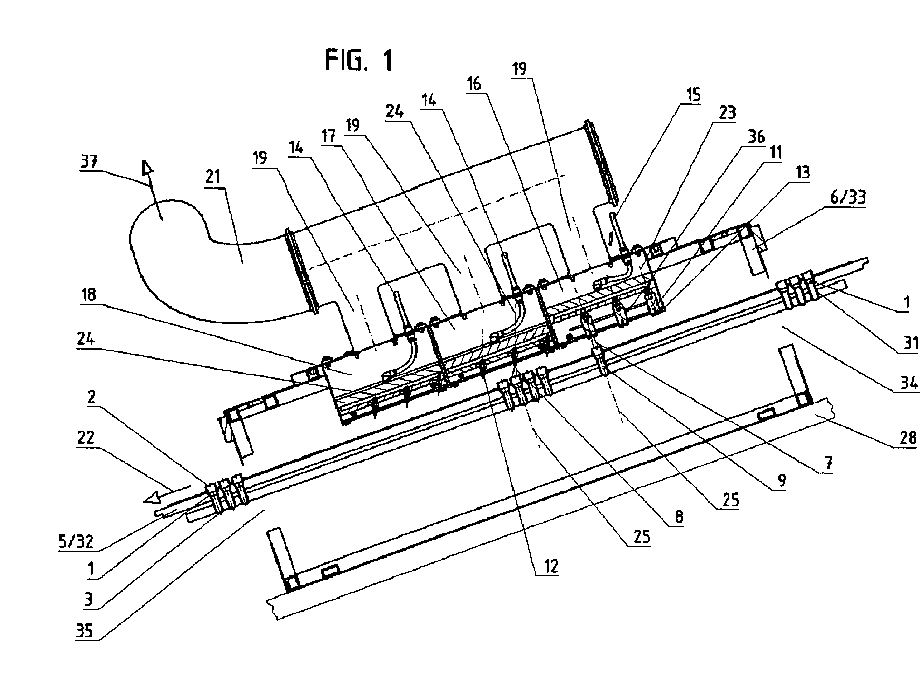

Fig. 1 zeigt einen Längsschnitt durch einen Teilbereich einer Transportstrecke 5 in einer Fördereinrichtung für Hohlkörper, im dargestellten Beispiel Vorformlinge 1 für Kunststoffflaschen, mit einer erfindungsgemässen Vorrichtung zum Ausblasen bzw. Reinigen der Hohlräume 9 dieser Vorformlinge 1. Bei den Vorformlingen 1 handelt es sich um zylindrische Körper, welche ein offenes Ende 2 und ein geschlossenes Ende 3 aufweisen, wobei das offene Ende 2 während der Förderung der Vorformlinge 1 in Richtung des Pfeiles 22 entlang der Transportstrecke 5 nach oben gerichtet ist. Die Vorformlinge 1 sind hohl und weisen einen Hohlraum 9 auf. Das offene Ende 2 der Vorformlinge 1 weist einen Gewindestutzen 29 und daran anschliessend einen Kragen 30 auf, dessen Durchmesser grösser ist als der übrige zylindrische Körper 31. Die Transportstrecke 5 besteht im dargestellten Beispiel aus zwei parallelen, mit Abstand zueinander angeordneten und in Förderrichtung 22 geneigten Ablaufschienen 32. Die Vorformlinge 1 liegen mit ihrem Kragen 30 auf diesen Ablaufschienen 32 auf und der zylindrische Körper 31 hängt durch den Zwischenraum zwischen den Ablaufschienen 32 nach unten. Die geordnete Reihe der aneinander anschliessenden Vorformlinge 1 wird durch ihr Gewicht entlang den geneigten Ablaufschienen 32 in Förderrichtung 22 gefördert.

Die Transportstrecke 5 kann anstelle der Ablaufschienen 32 auch durch andere geeignete und bekannte Mittel, wie zum Beispiel einen Rollenförderer, gebildet sein.

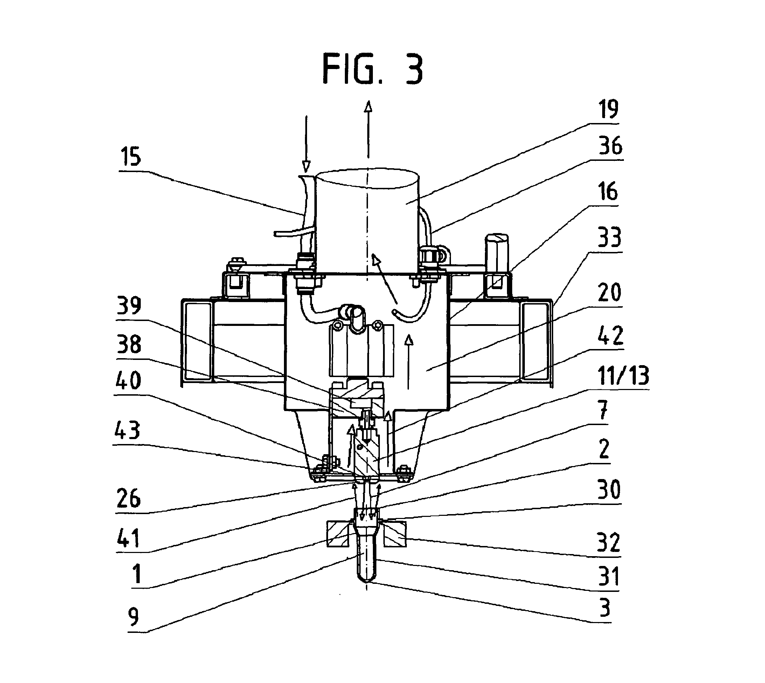

Um den dargestellten Teilbereich der Transportstrecke 5 ist eine Einrichtung 6 aufgebaut, welche ein Gehäuse 33 und mehrere Baugruppen 16, 17, 18 mit Gasdüsen 11 bzw. 12 umfasst. Das Gehäuse 33 ist an einem nur schematisch dargestellten Maschinengestell 28 abgestützt. Das Gehäuse 33 weist an gegenüberliegenden Stirnseiten eine Eintrittsöffnung 34 und in Förderrichtung 22 gesehen an der anderen Seite eine Austrittsöffnung 35 auf. Durch diese beiden Öffnungen 34, 35 sind die Ablaufschienen 32 mit den darauf angeordneten Vorformlingen 1 geführt. Dabei erfolgt kein Eingriff in die Orientierung oder Anordnung der Vorformlinge 1 auf den Ablaufschienen 32. Über den Vorformlingen 1 bzw. deren offenem Ende 2 ist im Gehäuse 33, in Transportrichtung 22 gesehen, zuerst eine erste Baugruppe 16 angeordnet, welche mindestens eine, im dargestellten Beispiel drei Gasdüsen 11 mit einer lonisiereinrichtung 13 enthält. Die Anordnung dieser Gasdüsen 11 ist zu Fig. 3 näher erläutert. Die Baugruppe 16 weist eine Zuführungsleitung 15 für Druckgas, im dargestellten Beispiel Druckluft, einen Absaugkanal 19 für verschmutztes Gas und eine elektrische Leitung 36 für die Zuführung von Strom zu der lonisiereinrichtung 13 auf. Der Absaugkanal 19 ist mit einem Sammelkanal 21 verbunden, über welchen das verschmutzte Gas in Richtung des Pfeiles 37 abgesaugt und einem nicht dargestellten Absaug-/Filtergerät zugeführt wird. Mit den Gasdüsen 11 wird ein ionisierter Gas- bzw. Luftstrom 7 erzeugt, welcher in den Hohlraum 9 der in Richtung 22 durchlaufenden Vorformlinge 1 geblasen wird. Im dargestellten Beispiel ist die Strömungsachse 23 der Gasdüse 11 und damit des ionisierten Luftstromes 7 zentrisch zur Längsachse 25 der Hohlräume 9 der Vorformlinge 1 ausgerichtet. Bei Bedarf kann die Strömungsachse 23 der Gasdüse 11 aber auch schräg zur Längsachse 25 der Hohlräume 9 angeordnet sein, wobei sie dann von der Förderrichtung 22 weg geneigt ist. Die in die Hohlräume 9 der Vorformlinge 1 eingeblasene, ionisierte Luft 7 neutralisiert in an sich bekannter Weise allfällige elektrostatische Ladungen in diesem Hohlraum 9 und bewirkt, dass Schmutzteile nicht an den Wandungen haften und aus dem

Hohlraum 9 ausgeblasen werden können. Die Gasdüsen 11 mit den lonisiereinrichtungen 13 werden mit relativ niedrigem Druck in den Zuführungsleitungen 15 betrieben. Dieser Druck wird auf die jeweiligen praktischen Faktoren wie Ausgestaltung, Gewicht und Förderergeschwindigkeit der geförderten und zu reinigenden Vorformlinge 1 abgestimmt und zwar so, dass diese Vorformlinge 1 in ihrem Bewegungsablauf in Förderrichtung 22 nicht behindert werden. Der Druck kann dabei zwischen 1 bar und mehreren bar liegen. Dieser niedrige Druck ermöglicht es, einfache Düsen und lonisiereinrichtungen zu verwenden und reduziert auch den Verbrauch von ionisiertem Gas. Da der ionisierte Gasstrom 7 nur in geringem Masse oder überhaupt nicht zum Ausblasen des Hohlraumes 9 vorgesehen ist, kann der Druck niedriger sein als bei normalen Ausblasdüsen, wobei er mindestens 0,5 bar tiefer ist. Im dargestellten Beispiel werden die Gas- bzw. Luftdüsen 11 über die Zuführungsleitungen 15 mit einem Druck von 2 bar beaufschlagt. Auch die Anzahl der Düsen 11 mit einer lonisiereinrichtung 13 kann reduziert werden und zwar so, dass nur die gewünschte Neutralisierung der elektrischen Ladungen im Hohlraum 9 der Vorformlinge 1 gewährleistet ist. Damit kann der Aufwand für die lonisiereinrichtungen reduziert werden. Abhängig von den Betriebsbedingungen kann die Baugruppe 16 eine oder mehrere Düsen 11 mit einer lonisiereinrichtung 13 aufweisen. Die Baugruppe 16 ist als austauschbare Einheit ausgebildet, welche im Bedarfsfall in einfacher Weise als Einheit ein- bzw. ausgebaut werden kann. Es ist deshalb auch möglich, bei Bedarf eine zweite Baugruppe 16 in das Gehäuse 33 einzubauen, welche im Standardfall wiederum drei Düsen 11 enthält.

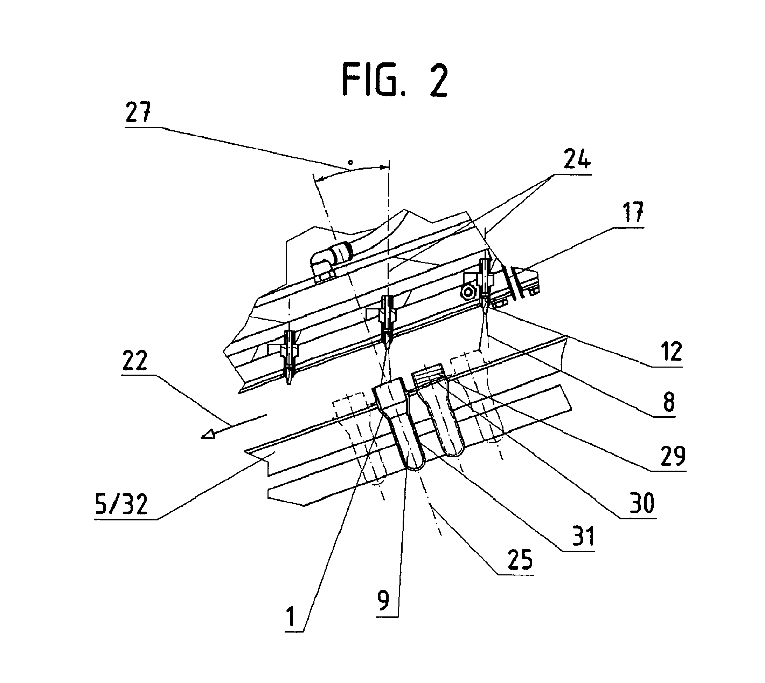

In Förderrichtung 22 gesehen ist im Gehäuse 33, an die erste Baugruppe 16 anschliessend, eine zweite Baugruppe 17 angeordnet, welche mindestens eine, im dargestellten Beispiel drei Gasdüsen 12 ohne lonisiereinrichtung aufweist. Diese Baugruppe 17 weist ebenfalls eine Zuführungsleitung 14 für Druckgas bzw. Luft und einen eigenen Absaugkanal 19, welcher mit dem Sammel Kanal 21 verbunden ist, auf. Diese Düsen 12 ohne lonisiereinrichtung sind dazu bestimmt, einen Gas- bzw. Luftstrom 8 zu erzeugen mit welchem der Hohlraum 9 der Vorformlinge 1 ausgeblasen wird und allfällige Schmutzpartikel entfernt werden. Diese Düsen 12 werden über die Zuführungsleitung 14 mit einem entsprechend höheren Druck beaufschlagt, wodurch ein Gasstrom 8 mit höherer Strömungsgeschwindigkeit und höherer Durchflussmenge erzeugt wird. Dabei liegt der Druck zwischen 1,5 bar und mehreren bar, wobei im dargestellten Beispiel ein Druck von vier bar gewählt ist. Die Strömungsachse 24 der Gasdüsen 12 und damit des Gasstromes 8 ist in dieser Baugruppe 17 schräg zur Längsachse 25 der Hohlräume 9 der Vorformlinge 1 angeordnet. Fig. 2 zeigt diese Anordnung in vergrösserter Darstellung, wobei die Strömungssachse 24 in Gegenrichtung zur Transportrichtung 22 der Hohlkörper 1 geneigt ist. Zwischen den beiden Achsen 24 und 25 ist dabei ein Winkel 27 eingeschlossen, welcher zwischen 1° und 60° liegen kann. Im dargestellten Beispiel ist ein Winkel von 20° gewählt. Durch die Schrägstellung der Strömungsachse 24 kann verhindert werden, dass der höhere Arbeitsdruck an diesen Düsen 12 und damit des Gasstromes 8 die Kragen 30 der Vorformlinge 1 so stark gegen die Ablaufschienen 32 drückt, dass diese in ihrem Bewegungsablauf behindert werden. Der Winkel 27 wird deshalb so gewählt, dass eine Kraftkomponente, welche durch den Gasstrom 8 in Förderrichtung 22 auf die Vorformlinge 1 wirkt, mindestens die Bremswirkung aufhebt und/oder zusätzlich eine bessere Förderung der Vorformlinge 1 in Förderrichtung 22 bewirkt.

Da bei den heutigen Förderereinrichtungen 4 für Vorformlinge 1 die Fördergeschwindigkeiten in Förderrichtung 22 sehr hoch sind, wird im dargestellten Beispiel vorgeschlagen, an die zweite Baugruppe 17 eine dritte Baugruppe 18 mit Düsen 12 ohne lonisiereinrichtung anzufügen. Diese Baugruppe 18 ist gleich ausgebildet wie die Baugruppe 17. Durch die Vielzahl von Düsen 12 wird gewährleistet, dass alle durchlaufenden Vorformlinge 1 in gewünschter Weise und mit einem guten Reinigungsgrad ausgeblasen werden.

Fig. 3 zeigt einen Querschnitt durch die Baugruppe 16 in vereinfachter Darstellung. Die Baugruppe 16 ist lösbar mit dem Gehäuse 33 verbunden. In der Baugruppe 16 ist eine Montageschiene 38 angeordnet, welche einen Verteilkanal 39 für die über die Zuführungsleitung 15 zugeführte Druckluft aufweist. An dieser Montageschiene 38 sind die Gasdüsen 11 befestigt und mit dem Verteilkanal 39 für die Druckluft verbunden. Jede Düse 11 weist eine an sich bekannte lonisiereinrichtung 13 auf, welche im Bereiche des Luftaustrittes 40 mit leitfähigen Elementen 26 zur Erzeugung einer Koronaentladung ausgestattet ist. Die Ionisiereinrichtung 13 wird über die elektrische Leitung 36 mit Strom versorgt. Der ionisierte Luftstrom 7 wird in den Hohlraum 9 der Vorformlinge 1 geblasen und allfällige vorhandene Schmutzteile sowie der Hohlkörper werden elektrostatisch neutralisiert und teilweise in Richtung der Pfeile 41 aus dem Hohlraum 9 heraus geblasen. Die verschmutzte Luft, welche in Richtung der Pfeile 41 austritt, wird abgesaugt und strömt in Richtung der Pfeile 42 durch eine Öffnung 43 in einen Absaugkanal 20 in der Baugruppe 16. Von hier wird diese verschmutzte Luft über den Absaugkanal 19 dem Sammelkanal 21 zugeführt. Der Sammelkanal 21 ist mit einem nicht dargestellten Absaug-/Filtergerät verbunden, über welches die Schmutz-und Staubpartikel abgeschieden werden.

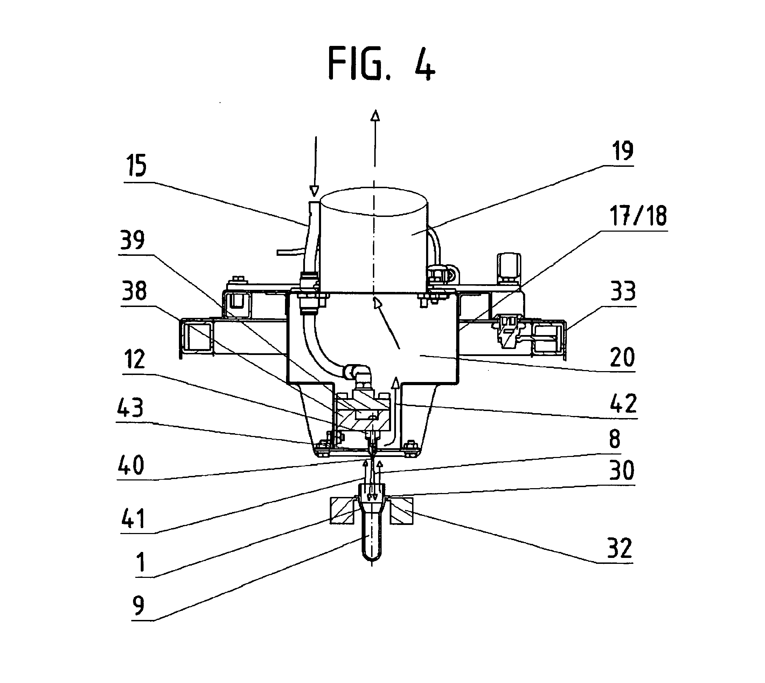

Fig. 4 zeigt einen Querschnitt durch die Baugruppe 17 bzw. 18 in vereinfachter Darstellung. Auch diese Baugruppe 17 bzw. 18 ist lösbar mit dem Gehäuse 33 verbunden. In der Baugruppe 17/18 ist ebenfalls eine Montageschiene 38 mit einem Verteilkanal 39 für Druckluft vorhanden. Dieser Verteilkanal 39 ist mit einer Zuführungsleitung 15 für Druckluft verbunden. An dieser Montageschiene 38 sind die Gasdüsen 12 befestigt und mit dem Verteilkanal 39 für die Druckluft verbunden. Am Luftaustritt 40 der Gasdüse 12 tritt ein nicht ionisierter Luftstrahl 8 aus und wird in den Hohlraum 9 der Vorformlinge 1 geblasen. Die mit Schmutzpartikeln beladene Luft tritt auch hier wieder in Richtung der Pfeile 41 aus dem Hohlraum 9 aus und wird in Richtung der Pfeile 42 über die Öffnung 43 und den Absaugkanal 20 sowie den Absaugkanal 19 und den Sammelkanal 21 abgesaugt. Wie zu den Figuren 1 und 2 beschrieben wird, sind die Düsen 12 und damit die Strömungsachsen 24 der Gasströme 8 schräg zur Längsachse 25 der Hohlräume 9 der Vorformlinge 1 gerichtet.

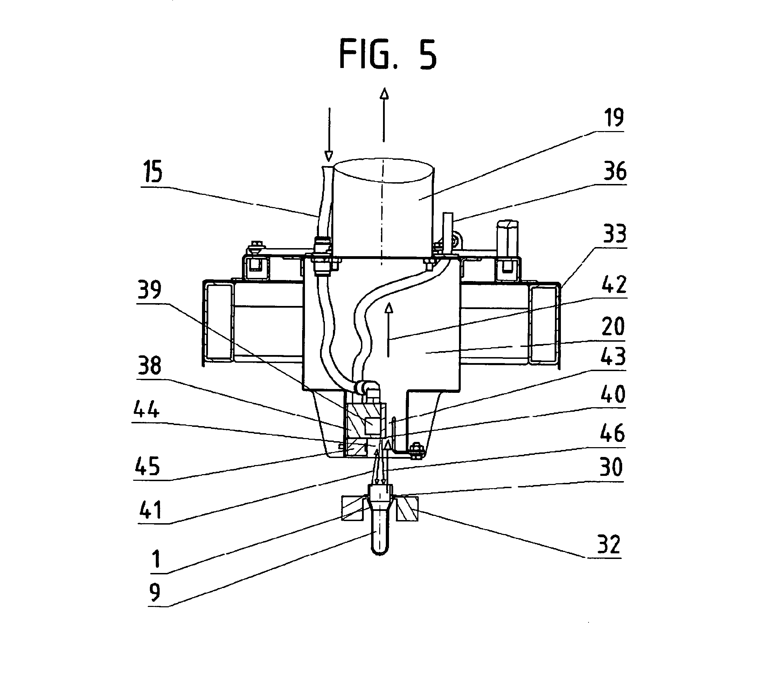

Fig. 5 zeigt einen Querschnitt durch eine alternative Ausgestaltung der Baugruppe 16 mit einer in Schlitzform ausgebildeten Luftdüse 44 und einem integrierten, an sich bekannten Ionisationsstab 45. Die übrigen Bauelemente sind gleich ausgebildet wie zu Fig. 3 beschrieben. Mit der Luftdüse 44 wird ein Gasstrom 46 erzeugt, welcher einen langgestreckten Querschnitt aufweist und sich in Förderrichtung 22 über eine bestimmte Länge erstreckt. Seitlich zu diesem Gasstrom 46 ist die lonisiereinrichtung mit dem lonisierstab 45 angeordnet. Der lonisierstab 45 erstreckt sich über die Länge des Gasstroms 46 und kann den gesamten langgestreckten Gasstrom ionisieren.

## Patentansprüche

1. Verfahren zum Ausblasen von Hohlkörpern (1), welche an einem Ende offen und am andern Ende verschlossen sind, wie Vorformlinge für Kunststoffbehälter, wobei diese Hohlkörper (1) in einer Reihe geordnet und mittels einer Fördereinrichtung entlang einer Transportstrecke (5) gefördert werden und während der Förderbewegung ein Gasstrom (7, 8) in den Hohlraum (9) der Hohlkörper (1) hineingeblasen wird und das aus dem Hohlraum austretende Gas lose Teile mitreisst und der Hohlraum (9) gereinigt wird, sowie das Gas mit den Verunreinigungen abgesaugt wird, **dadurch gekennzeichnet, dass** mehrere Gasströme (7, 8) unterschiedlicher Art verwendet werden und zuerst mindestens ein erster Strom (7) von ionisiertem Gas in den Hohlraum (9) jedes Hohlkörpers (1) geblasen wird und die elektrostatischen Ladungen im Hohlraum (9) und des Hohlkörpers (1) neutralisiert werden und daran anschliessend mindestens ein zweiter Strom (8) von nicht ionisiertem Gas in den Hohlraum (9) jedes Hohlkörpers (1) geblasen wird.

2. Verfahren nach Patentanspruch 1, **dadurch gekennzeichnet, dass** die Strömungsachse (24) mindestens eines der eingeblasenen Gasströme (7, 8) schräg zur Längsachse (25) des Hohlraumes (9) und teilweise in Richtung (22) der Förderung der Hohlkörper (1) gerichtet wird.

3. Verfahren nach Patentanspruch 1 oder 2, **dadurch gekennzeichnet, dass** die Strömungsachse (23, 24) mindestens eines der eingeblasenen Gasströme (7, 8) exzentrisch zur Längsachse (25) des Hohlraumes (9) der Hohlkörper (1) ausgerichtet wird.

4. Verfahren nach einem der Patentansprüche 1 bis 3, **dadurch gekennzeichnet, dass** als Gas Luft verwendet wird.

5. Verfahren nach einem der Patentansprüche 1 bis 4, **dadurch gekennzeichnet, dass** der Druck, mit welchem der ionisierte Gasstrom (7) erzeugt wird, so bestimmt wird, dass die Hohlkörper (1) in ihrer Förderbewegung (22) nicht gebremst werden und dieser Druck niedriger ist als der Druck, mit welchem der nicht ionisierte Gasstrom (8) erzeugt wird.

6. Vorrichtung zum Ausblasen von Hohlkörpern(1), welche an einem Ende (2) offen und am andern Ende (3) verschlossen sind, wie Vorformlinge für Kunststoffbehälter, wobei diese Hohlkörper (1) mit nach oben gerichtetem offenem Ende hängend und in einer Reihe in einer Fördereinrichtung angeordnet sind und entlang einer Transportstrecke (5) gefördert werden und in einem Teilbereich (10) der Transportstrecke (5) eine Einrichtung (6) zum Einblasen eines ionisierten Gasstromes (7) in den Hohlraum (9) der Hohlkörper (1) angeordnet ist, **dadurch gekennzeichnet, dass** im Teilbereich (10) der Transportstrecke (5) und über den Hohlkörpern (1) mindestens zwei Baugruppen von unterschiedlich ausgebildeten Gasdüsen (11, 12) zur Erzeugung mehrerer Gasströme (7, 8) angeordnet sind, eine erste Baugruppe (16) mit mindestens einer Gasdüse (11) mit einer lonisiereinrichtung (13) ausgestattet ist und eine zweite Baugruppe (17) mindestens eine Gasdüse (12) ohne lonisiereinrichtung aufweist.

7. Vorrichtung nach Patentanspruch 6, **dadurch gekennzeichnet, dass** die Gasdüsen mit Zufuhrleitungen (14, 15) für Druckgas, wie Druckluft, verbunden sind.

8. Vorrichtung nach Patentanspruch 6 oder 7, **dadurch gekennzeichnet, dass** eine oder mehrere der unterschiedlich ausgebildeten Gasdüsen (11, 12) jeweils in einer als Baugruppe (16, 17, 18) ausgebildeten Vorrichtung angeordnet sind und jede dieser Baugruppen (16, 17, 18) eine eigene Zuleitung (14, 15) für das Druckgas zu den Gasdüsen (11, 12) und einen eigenen Absaugkanal (19, 20) für das aus den Hohlkörpern (1) austretende verschmutzte Gas aufweist.

9. Vorrichtung nach einem der Patentansprüche 6 bis 8, **dadurch gekennzeichnet, dass** in der Förderrichtung (22) der Hohlkörper (1) gesehen zuerst eine erste Baugruppe (16) mit drei Gasdüsen (11) mit einer lonisiereinrichtung (13) angeordnet ist, daran anschliessend eine zweite Baugruppe (17) mit drei Gasdüsen (12) ohne lonisiereinrichtung folgt und an diese zweite Baugruppe (17) anschliessend eine dritte Baugruppe (18) mit drei Gasdüsen (12) ohne lonisiereinrichtung angeordnet ist.

10. Vorrichtung nach einem der Patentansprüche 6 bis 9, **dadurch gekennzeichnet, dass** mindestens die Strömungsachse (24) der Gasdüsen (12) ohne lonisiereinrichtung schräg zur Längsachse (25) des Hohlraumes (9) der Hohlkörper (1) ausgerichtet ist und dabei die Strömungsachse (24) der Gasdüsen (12) in Gegenrichtung zur Transportrichtung (22) der Hohlkörper (1) geneigt ist.

11. Vorrichtung nach einem der Patentansprüche 6 bis 10, **dadurch gekennzeichnet, dass** die Gasdüsen (11) mit einer lonisiereinrichtung (13) mit Druckluft und einem Druck beaufschlagt sind, welcher mindestens 0,5 bar niedriger ist als der Druck der Druckluft, mit welcher die Gasdüsen (12) ohne lonisiereinrichtung beaufschlagt sind.

12. Vorrichtung nach einem der Patentansprüche 6 bis 11, **dadurch gekennzeichnet, dass** die Gasdüsen (11) mit einer lonisiereinrichtung (13) Einzeldüsen mit einer Düsenbohrung sind und diese Düsen (11) an der Austrittsöffnung leitfähige Elemente (26) für die Erzeugung einer Koronaentladung aufweisen.

13. Vorrichtung nach einem der Patentansprüche 6 bis 11, **dadurch gekennzeichnet, dass** die Gasdüsen mit der lonisiereinrichtung aus einer in Schlitzform ausgebildeten Düse (44) bestehen und einen integrierten lonisationsstab (45) enthalten.

14. Vorrichtung nach Patentanspruch 10, **dadurch gekennzeichnet, dass** die Strömungsachse (24) der Gasdüsen (12) ohne lonisiereinrichtung mit der Längsachse (25) der Hohlräume (9) der Hohlkörper (1) einen Winkel (27) von mindestens 1° und maximal 60° einschliesst.
